Europäisches Patentamt

European Patent Office

Office européen des brevets

(19)

(11) Veröffentlichungsnummer: **0 158 625**
A1

(12) ## EUROPÄISCHE PATENTANMELDUNG

(21) Anmeldenummer: **85890062.4**

(22) Anmeldetag: **15.03.85**

(51) Int. Cl.⁴: **F 01 N 3/28**
F 01 N 3/02, F 01 N 1/02

(30) Priorität: **15.03.84 AT 856/84**

(43) Veröffentlichungstag der Anmeldung:
**16.10.85 Patentblatt 85/42**

(84) Benannte Vertragsstaaten:
CH DE FR GB IT LI NL SE

(71) Anmelder: **Jenbacher Werke AG**
**Achenseestrasse 1-3**
**A-6200 Jenbach/Tirol(AT)**

(72) Erfinder: **Söllner, Robert**
**Sieglstrasse 15**
**A-6200 Jenbach(AT)**

(72) Erfinder: **Hein, Karl**

**A-8962 Gröbming 528(AT)**

(74) Vertreter: **Torggler, Paul Dr. et al,**
**Wilhelm-Greil-Strasse 16**
**A-6020 Innsbruck(AT)**

(54) **Schalldämpfend ausgebildete katalytische Reinigungsvorrichtung für die Abgase von Brennkraftmaschinen.**

(57) Der Wärmetauscher einer schalldämpfend ausgebildeten, katalytischen Reinigungsvorrichtung für die Abgase von Brennkraftmaschinen, der Wärme aus den Auspuffgasen während der vom Katalysator vermittelten Reaktion abführt, ist in mindestens zwei Teilen unterteilt. Der erste Teil (4) des Wärmetauschers ist dazu bestimmt, die Temperatur des Abgases vor Eintritt in die Katalysatorkammer (7) auf die Reaktionstemperatur zwischen etwa 270 und 500°C einzustellen, die für die verschiedenen bekannten Verfahren jeweils am günstigsten ist. Nach Beendigung der vom Katalysator (8) vermittelten Reaktion werden die Abgase durch einen weiteren Teil (15) des Wärmetauschers geleitet.

EP 0 158 625 A1

./...

Fig. 1

Schalldämpfend ausgebildete katalytische
Reinigungsvorrichtung für die Abgase von
Brennkraftmaschinen

Die nachstehende Erfindung bezieht sich auf eine schalldämpfend ausgebildete katalytische Reinigungsvorrichtung für die Abgase von Brennkraftmaschinen, mit mindestens einem Wärmetauscher zur Abführung von Wärme aus den Auspuffgasen während der vom Katalysator vermittelten Reaktion.

Die Vorschriften zur Reinhaltung der Luft machen es erforderlich, insbesondere aus Verbrennungsmotoren austretende Abgase in besonderer Weise zu behandeln. Hiezu ist im allgemeinen eine Abgasschalldämpfung, in besonderen Fällen auch eine Beseitigung von Schadstoffen durch Verminderung mittels Katalysatoren bekannt. Bei der Verbesserung der Wirtschaftlichkeit wird häufig auch die Abwärme über Wärmetauscher nutzbar gemacht.

Eine derartige Reinigungsvorrichtung ist beispielsweise der DE-C-1 476 623 zu entnehmen. Dort wird es als vorteilhaft bezeichnet, die Katalysatorkammer mit Wärmeaustauschmitteln umstreichen zu lassen, da sich in dieser Kammer exotherme Reaktionen abspielen. Dadurch soll die Überhitzung des Katalysators vermieden werden.

Die Erfindung hat es sich nun zur Aufgabe gestellt, eine Reinigungsvorrichtung der eingangs genannten Art so auszubilden, daß neben dem Wärmeaustausch zur Vermeidung der Katalysaorüberhitzung generell die Energie der heißen Abgase in einem Ausmaß rückgewonnen wird, daß günstige Reaktionsbedingungen gegeben sind.

Erfindungsgemäß wird diese Aufgabe dadurch gelöst, daß der Wärmetauscher in mindestens zwei Teilen unterteilt ist, wovon der erste Teil dazu bestimmt ist, die Temperatur des Abgases vor Eintritt in die Katalysatorkammer

28160                                                        25|si

auf die für die verschiedenen bekannten Verfahren jeweils günstigste Reaktionstemperatur zwischen etwa 270 und 500°C einzustellen.

Dabei sind die Komponenten einer Abgasanlage für Abgasschalldämpfung, Abgaswärmetauscher, Abgasbehandlung nicht nur kompakt und preisgünstig in einem Baukörper zusammengefaßt, sondern durch die zweckentsprechende Aufteilung des Abgaswärmetauschers in zumindest zwei Teile wird zunächst die für den Ablauf der Reaktion jeweils günstigste Temperatur erreicht, und in bevorzugter Ausbildung anschließend das Gas nicht nur während der Reaktion in der Katalysatorkammer, sondern auch nachher gekühlt, da nach der Reaktion eine wesentlich weitere Temperaturabsenkung (beispielsweise auf 180°C) möglich ist. Es wird damit auch die Restwärme im Sinne der optimalen Ausnützung der Brennstoffenergie dem Übertragungsmedium zugeführt.

Weitere vorteilhafte Ausbildungen der Reinigungsvorrichtung sind den Unteransprüchen zu entnehmen.

Anhand der beiliegenden Zeichnugen Fig. 1 bis Fig. 4 wird die Erfindung beispielsweise erläutert.
Es zeigen:

Fig. 1   eine mögliche Grundausführung der Reinigungsvorrichtung, und

Fig. 2 - 4 drei weitere Ausführungsbeispiele, jeweils im Längsschnitt.

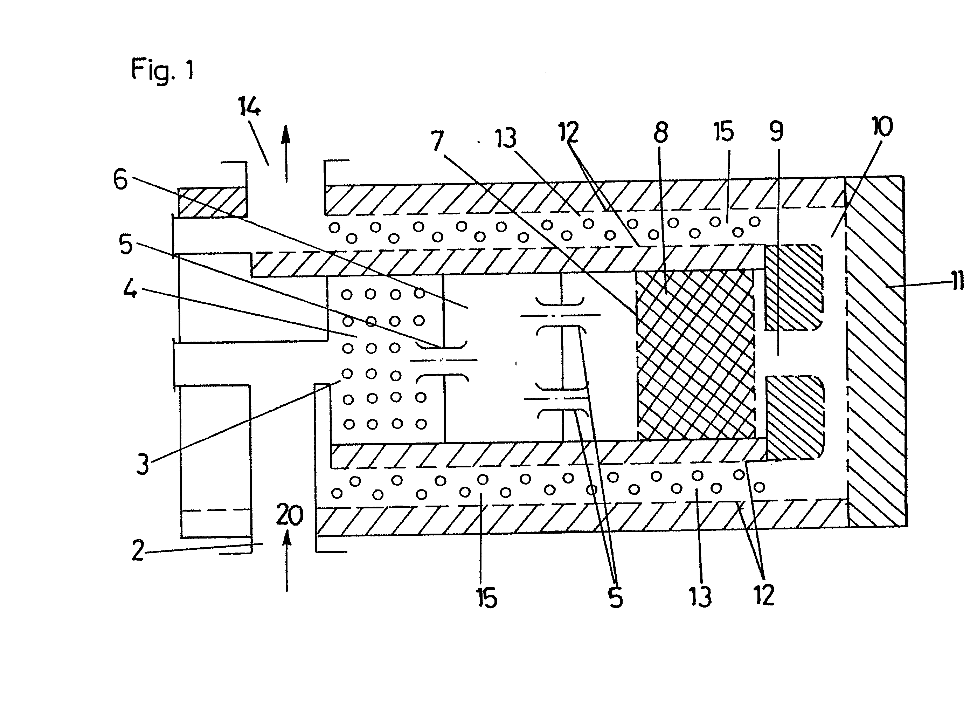

In Fig. 1 wird das Abgas der Abgasanlage vom Verbrennungsmotor 1 durch die Abgasleitung 2, in welcher der Abgasstrom 20 strömt, einer Vorkammer 3 zugeführt. In dieser ist ein erster Teil 4 des Wärmetauschers angeordnet. In an sich bekannter Weise ist die Vorkammer 3 durch ein oder mehrere Resonanzrohre 5 von der bzw. den nächsten Kammern 6,7 so abgeteilt, daß nach den bekannten Regeln der Akustik eine Verringerung der Schwingungen im Abgassystem und damit eine Schalldämpfung erzielt wird. Die
Rohre des ersten Teils 4 des Wärmetauschers sind vorzugsweise so angeordnet, daß die für die Gasströmung freibleibenden Querschnitte den Verengungen nach dem Resonanzprinzip entsprechen. Die Kammer 6 kann ebenfalls einen
Teil des Wärmetauschers enthalten, was aber in der
Zeichnung nicht näher dargestellt ist. Die Katalysatorkammer 7 wird zur Unterbringung der an sich bekannten
Katalysatoren ausgenutzt. Hierbei tritt eine weitere
Dämpfungswirkung ein. Das Abgas strömt dann durch die
Leitung 9 in einen Radialdiffusor ein, in dem seine
Strömungsgeschwindigkeit einerseits unter Druckrückgewinnung verringert wird, der aber andererseits durch
absorbierende Ausführung des Diffusordeckels 11 als
Absorptionsschalldämpfer wirkt, ebenso wie die Wände
12 der Wärmetauscherkammer 13. In dieser befindet sich
ein weiterer Teil des Wärmetauschers 15. Schließlich
verläßt das Abgas die Abgasanlage durch die Öffnung zum
Kamin 14.

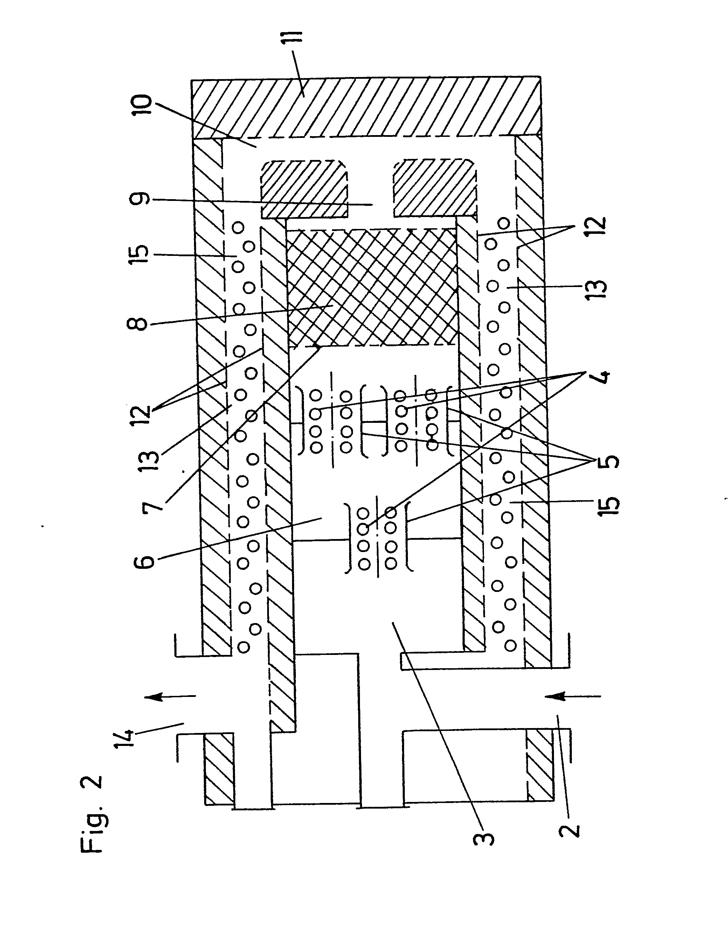

In Fig. 2 ist eine beispielsweise Variante der Erfindung
dargestellt, nach welcher der erste Teil 4 des Wärmetauschers 4 anstelle der bzw. in Kombination mit den
Resonanzrohren 5 angeordnet sind, wodurch eine erhöhte
Resonanzdämpfung erreicht wird.

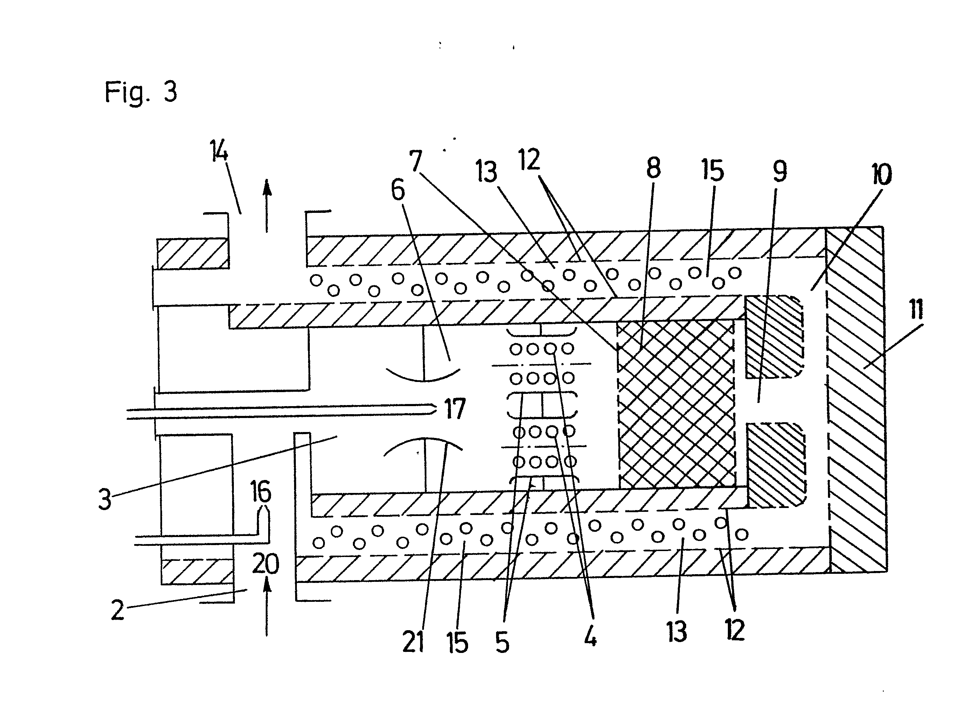

In Fig. 3 sind schematisch zwei Düsen 16,17 dargestellt,
mit welchen Reaktionsstoffe in den Abgasstrom eingebracht
werden können, die den Prozess zur Verringerung der
Emissionen begünstigen. Die konkrete Anordnung der Düsen
16,17 kann auch an anderen Stellen erfolgen. Insbesondere
ist auch die Lage der Düse in einem Venturi-Rohr, wie für
Düse 17 beispielsweise gezeichnet, zur Verstärkung des
Strömungs- und Mischeffektes vorgesehen. Die Düse 16
liegt unmittelbar im Abgaseinlaßstrom 20.

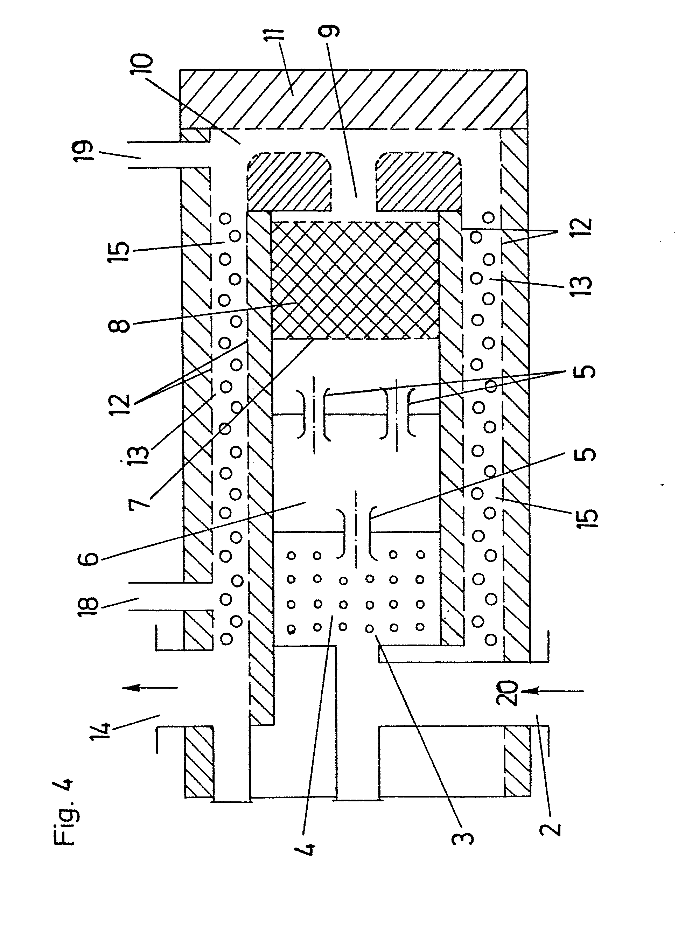

In Fig. 4 ist die gesamte Anlage ähnlich wie Fig. 1 ausgebildet, doch könnte sie auch in einer der beiden anderen Varianten ausgebildet sein. Zusätzlich ist die Reinigungsvorrichtung mit Anschlußrohren 18,19 ausgerüstet, durch welche Luft- oder Gasströme bzw. Reaktionsstoffe eingebracht werden können. Die konkrete Lage dieser Einströmöffnungen ist beispielsweise eingezeichnet. Ebenso ist es aber auch möglich, diese Anschlußrohre in Düsenform ausmünden zu lassen. Vorgesehen, wenn auch zeichnerisch nicht dargestellt, ist, daß die Anschlußrohre 18,19 mit einer Bypass-Leitung miteinander verbunden sind, um bei fehlendem Wärmebedarf den weiteren Teil 13 des Wärmetauschers umgehen zu können.

In den Zeichnungen nicht dargestellt ist eine entsprechende Mengenregelung des einzubringenden Reaktionsstoffes mittels einem Ventil in Abhängigkeit vom Abgasstrom bzw. von der Abgasmenge.

Patentansprüche :

1. Schalldämpfend ausgebildete katalytische Reinigungsvorrichtung für die Abgase von Brennkraftmaschinen, mit mindestens einem Wärmetauscher zur Abführung von Wärme aus den Auspuffgasen während der vom Katalysator vermittelten Reaktion, dadurch gekennzeichnet, daß der Wärmetauscher in mindestens zwei Teilen unterteilt ist, wovon der erste Teil (4) dazu bestimmt ist, die Temperatur des Abgases vor Eintritt in die Katalysatorkammer (7) auf die für die verschiedenen bekannten Verfahren jeweils günstigste Reaktionstemperatur zwischen etwa 270 und 500°C einzustellen.

2. Reinigungsvorrichtung nach Anspruch 1, daß eine den ersten Teil (4) des Wärmetauschers enthaltende Vorkammer (3) und die den Katalysator (8) enthaltende Katalysatorkammer (7) durch eine Resonanzkammer getrennt sind.

3. Reinigungsvorrichtung nach Anspruch 2, dadurch gekennzeichnet, daß zwischen Vorkammer (3) und Katalysatorkammer (7) Resonanzrohre (5) angeordnet sind.

4. Reinigungsvorrichtung nach Anspruch 1, dadurch gekennzeichnet, daß der erste Teil (4) des Wärmetauschers innerhalb von vom Abgas durchströmten Resonanzrohren (5) angeordnet ist (Fig. 2,3).

5. Reinigungsvorrichtung nach einem der Ansprüche 1 bis 4, dadurch gekennzeichnet, daß nach dem Durchströmen des Katalysators (8) eine Umlenkung des Abgases in einem Radialdiffusor (10) erfolgt, dessen Diffusordeckel (11) als Absorptionsschalldämpfer ausgebildet ist und gleichzeitig die Funktion der Wärmedämmung übernimmt.

6. Reinigungsvorrichtung nach Anspruch 5, dadurch gekennzeichnet, daß der Diffusordeckel (11) und der Radialdiffusor (10) leicht abnehmbar ausgebildet sind, sodaß
   sie zu Kontroll-, Reinigungs- und Revisionsarbeiten
   leicht geöffnet werden können und eine Beschickung mit
   dem Katalysator ermöglichen.

7. Reinigungsvorrichtung nach einem der Ansprüche 1 bis 6,
   dadurch gekennzeichnet, daß das Abgas nach Beendigung
   der vom Katalysator (8) vermittelten Reaktion durch
   einen weiteren Teil (15) des Wärmetauschers geleitet
   wird.

Fig. 1

Fig. 2

# Fig. 3

Fig. 4

Europäisches Patentamt

**EUROPÄISCHER RECHERCHENBERICHT**

**0158625**
Nummer der Anmeldung

EP 85 89 0062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 345 383 (DAIMLER-BENZ)<br>* Seite 7, Zeile 8 - Seite 9, Zeile 28; Figuren 1-3 * | 1 | F 01 N 3/28<br>F 01 N 3/02<br>F 01 N 1/02 |
| A | US-A-3 948 046 (DAVIDSON)<br>* Spalte 2, Zeilen 35-65; Spalte 3, Zeile 39 - Spalte 6, Zeile 7; Figuren 1,2 * | 1 | |
| A | US-A-3 109 715 (JOHNSON)<br>* Spalte 3, Zeile 75 - Spalte 6, Zeile 18; Figuren 1,2 * | 1,7 | |
| A | US-A-4 190 629 (STRACHAN)<br>* Spalte 1, Zeile 67 - Spalte 3, Zeile 21; Figuren * | 1,7 | |
| | | | RECHERCHIERTE SACHGEBIETE (Int. Cl.4) |
| A | CA-A- 849 235 (KOVACS)<br>* Seite 4, Zeilen 2-5; Seite 5, Zeile 29 - Seite 6, Zeile 12; Figuren * | 2,3 | F 01 N |
| A | DE-A-1 942 227 (AEROLYT)<br>* Seite 4, Zeile 11 - Seite 7, Zeile 4; Figuren 1-6 * | 1 | |

Der vorliegende Recherchenbericht wurde für alle Patentansprüche erstellt

| Recherchenort<br>DEN HAAG | Abschlußdatum der Recherche<br>18-06-1985 | Prüfer<br>HAKHVERDI M. |
|---|---|---|